# EUROPÄISCHE PATENTSCHRIFT

(11) **EP 3 154 915 B1**
(45) Veröffentlichungstag und Bekanntmachung des Hinweises auf die Patenterteilung: **06.01.2021**
(21) Anmeldenummer: 15732511.9
(22) Anmeldetag: 16.06.2015
(51) Int. Cl.: C03C 25/24, C08G 12/06

(54) **VERFAHREN ZUR HERSTELLUNG EINES WASSERLÖSLICHEN PREPOLYMEREN UND PREPOLYMER HERGESTELLT NACH DEM VERFAHREN**
PROCESS FOR PREPARING A WATER-SOLUBLE PREPOLYMER AND PREPOLYMER PREPARED BY SAID PROCESS
PROCÉDÉ DE PRODUCTION D'UN PRÉPOLYMÈRE HYDROSOLUBLE ET PRÉPOLYMÈRE PRODUIT SELON CE PROCÉDÉ

(30) Priorität: 16.06.2014 CH 907142014
(43) Veröffentlichungstag der Anmeldung: 19.04.2017
(73) Patentinhaber: Flumroc AG, 8890 Flums (CH); B.A.M. GmbH, 91472 Ipsheim (DE)
(72) Erfinder: SCHÖNFELD, Uwe, 74575 Schrozberg (DE); DIPPON, Klaus, 91459 Markt Erlbach (DE); CADRUVI, Pieder, 7000 Chur (CH); HOFSTETTER, Dominic, 8808 Pfäffikon (CH)
(74) Vertreter: Riederer Hasler & Partner Patentanwälte AG
(86) Internationale Anmeldenummer: PCT/CH2015/000091
(87) Internationale Veröffentlichungsnummer: WO 2015/192257

(56) Entgegenhaltungen:
- DE-T2- 60 303 949
- US-A1- 2009 227 706

## Beschreibung

Die Erfindung betrifft eine Zusammensetzung und ein Verfahren zur Herstellung eines wasserlöslichen Prepolymeren und ein Prepolymer hergestellt nach dem Verfahren.

### Stand der Technik

Faserhaltige Gebilde werden unter Verwendung von Bindemitteln erhalten, welche durch Polymerisieren aushärten. Die Herstellung faserhaltiger Gebilde aus mineralischen Fasern, wie z. B. Glaswolle- oder Steinwolle-Dämmplatten, erfolgt vielfach mit Bindemitteln, welche Formaldehyd-freisetzende Komponenten beinhalten. Die Herstellung von Mineralwolle beispielsweise erfolgt durch Schmelzen der mineralischen Komponenten und nachfolgende Zerfaserung des Schmelzflusses. Dies geschieht im Falle einer Glasschmelze durch Schleuder-, Düsenblas- bzw. Düsenzieh-Verfahren oder im Falle einer Gesteinsschmelze mit Hilfe eines Zerfaserungsrades oder einer schnell rotierenden Prallscheibe. Das Bindemittel wird dabei in der Nähe des Zerfaserungsortes auf das entstehende, heiße Faseragglomerat gesprüht. Hierbei wird das Bindemittel kurzfristig hohen Temperaturen ausgesetzt. Insbesondere erfährt dieses bei der Herstellung von Steinwolle-Dämmplatten im Fallschacht Temperaturschockeinwirkungen von mehreren 100 °C. Solche Bedingungen führen in der Regel zu einem gewissen Bindemittelverlust nach dem Einbringen. Zudem kennt man die gelegentliche Bildung glühender Fasernester. Diese so genannten "hot spots" können sich während oder kurz nach der Vlieslegung z.B. durch unvollständig verbrannte Koks-Partikel bilden. Die Folge sind z.B. Devitrifizierung von Mineralfaserbestandteilen und eine stark exotherme Degradation des Bindemittels. Hinweise zu diesen produktionsbedingten Problemen bei der Herstellung von Steinwolle-Dämmplatten sind auch aus DE 10 2005 063 381 Alsowie aus EP 2 549 006 A1 zu entnehmen. Aus den applikatorischen Anforderungen ergibt sich, dass ausschließlich wässrige Bindemittel zum Einsatz kommen können. Für diesen Verfahrensschritt haben sich vor allem wässrige Phenolharze bewährt, die ohne nennenswerte Degradation diese besonderen Umgebungsbedingungen überstehen und anschließend die harzbenetzte Fasermasse durch Polymerisieren zu einem faserhaltigen Gebilde verbinden. Wegen der Formaldehyd-freisetzenden Komponenten besteht die Gefahr, dass die erhaltenen faserhaltigen Formkörper sowohl unmittelbar nach der Herstellung als auch in verbauten Zustand Formaldehyd in erhöhten Konzentrationen emittieren können.

Formaldehydfreie wässrige Bindemittel sind dem Fachmann in vielfältiger Form seit langem bekannt. Viele wässrige Systeme sind unter den oben beschriebenen Bedingungen thermisch jedoch nicht genügend beständig, oder nach dem Aushärten nicht wasserfest. Zudem können diese verdampfen, bevor die Mineralfasern benetzt werden.

Unter den wässrigen Bindemitteln kennt der Fachmann formaldehydfreie Bindemittel-Lösungen und Dispersionen.

Eine solche Bindemittel-Dispersion für gebundene Mineralwolle enthält beispielsweise DE 10 2005 056791A. Beschrieben sind wässrige Bindemittel-Dispersionen aus endgecappten polymeren Polycarbonsäuren sowie speziellen Aminoverbindungen, einem aktivierten Silan und einem enolisierbaren Keton.

US 4,074,988 beschreibt mehrkomponentige Bindemittelsysteme zur Bindung von Glasfasern wobei eine wasserlösliche Komponente bestehend aus Polycarbonsäuren bzw. Anhydriden und polyfunktionellen Aminen mit einer Latex-Dispersion gemischt werden.

DE-A-2214450 enthält ein Bindemittel zur Bindung von Glasfasern bestehend aus einem Copolymerisat aus Ethylen und Maleinsäureanhydrid welches als Pulver oder als Dipersion mit einem aminogruppenhaltigen Polyol gehärtet werden kann.

Die in WO 2011/029810 A1 und WO 2010/034645 Aldargelegten Verfahren zur Herstellung wässriger Bindemittel-Dispersionen für körnige und/oder faserförmige Substrate beschreiben Coplymere aus ethylenisch ungesättigten Mono- und Dicarbonsäuren, wobei erstere zusätzlich mit einer ethylenisch ungesättigten Verbindung mit wenigstens einer Oxiranyl- oder Oxethanylgruppe, Acryl- und/oder Methacrylamids und einer weiteren ethylenisch ungesättigten Verbindung und letztere mit einem Polyol zu den beschriebenen Bindemitteln umgesetzt werden. Das Bindemittel gemäß WO 2011/029810 A1 soll sich besonders zur Beschichtung von Papier eignen, das Bindemittel gemäß WO 2010/034645 A1 hingegen soll zur Bindung von Faserstoffen vorteilhaft sein.

Speziell zur Herstellung von Steinwolle-Dämmplatten werden jedoch wässrige Bindemittel-Lösungen gewünscht, da nur diese einen störungsfreien Verarbeitungsablauf und eine gleichmäßige Faserbenetzung mit optimaler Faseranbindung ermöglichen können.

Formaldehydfreie wässrige Bindemittellösungen zur Bindung von Mineralfasern werden z.B. in DE 69315393 T3 und in EP 0826710 B1beschrieben. Die wässrigen hitzehärtbaren Zusammensetzungen aus polymeren Polysäuren, ausgewählten Aminoalkoholen und einem Phosphor-haltigen bzw. Fluorborat-haltigen Beschleuniger sollen sich als Bindemittel für Glasfaservliesstoffe eignen.

WO 99/36368, WO 01/05725, WO 01/96460, WO 02/06178, WO 2004/00761 und WO 2006/001249 enthalten wasserlösliche Bindemittel zur Bindung von Mineralwolle, welche als Reaktionsprodukt aus einem Alkanolamin, einem aliphatischen Anhydrid und einem aromatischen Anhydrid erhalten werden.

Neben den rein synthetischen wässrigen Bindemitteln findet man auch solche, die auf der Basis nachwachsender Rohstoffe oder anteilig aus nachwachsenden Rohstoffen bestehen.

WO 2013/0752 A1 enthält ein wässriges Bindemittel mit einem Polymerisat aus einer siliziumhaltigen Gruppe, Verbindung welche eine Epoxy-Hydroxyalkyl-, N-Methylol- oder Carbonylgruppe und/oder wenigstens zwei nichtkonjugierte ethylenisch ungesättigten Gruppen enthält, weiterer sich hiervon unterscheidender ethylenisch ungesättigter Verbindungen, sowie optional einer C4-C6 Mono- oder Dicarbonsäure. Zudem enthält die wässrige Polymer-Dispersion eine Ligninverbindung und soll sich vorzugsweise für bituminierte Dachbahnen eignen. Solche viskoelastischen Eigenschaften des gehärteten Bindemittels sind ungeeignet für die Bindung von Mineralwolle-Dämmstoffe.

EP 2072578 B1 beschreibt wässrige Bindemittel für körnige und oder faserförmige Substrate, die ein Polymerisat aus Itaconsäure, Itconsäureanhydrid und/oder Itaconsäurealkylester und einer ethylenisch ungesättigten C3-C4 Mono- oder Dicarbonsäure enthält sowie ein zusätzliches Polyol aufweist. Das Polymerisat soll laut angeführtem Beispiel wasserlöslich sein.

EP-A- 2597123 beschreibt wässrige Bindemittel für körnige und oder faserförmige Substrate, welche als Komponenten Polyamine aus Vinylamineinheiten und Saccharidverbindungen enthalten.

EP-A-1578879 enthält wässrige Acrylharze, die mit einem Polysaccharid gestreckt werden.

US 7772347 B2 beschreibt ein Bindemittel und Glasfaserprodukte aus Maillard-Reaktanden. Das Bindemittel wird durch eine Mischung von Monosacchariden und Ammoniumsalzen von Hydroxycarbonsäuren gebildet. Beim Aushärten entstehen Melanoidine.

Diese Bindemittel scheinen den besonderen thermischen Belastungen während der Steinwolle-Dämmplatten-Herstellung nur ungenügend standzuhalten.

WO 2013/014076 A1 offenbart mehrkomponentige wasserlösliche Bindemittel für den Einsatz von Mineralfaserdämmstoffen, welche hohe Feuerbeständigkeit und antipunk-Eigenschaften besitzen sollen. Die Komponenten bestehen aus einem Vorprodukt, welches durch Reaktion von Alkanolaminen mit Polycarbonsäuren oder Anhydriden erhalten wird, einem Saccharid sowie Harnstoff.

WO 2013/079680 A1 beschreibt eine wässrige Bindemittelzusammensetzung für die Bindung von Mineralfasern, welches durch ein Reaktionsprodukt aus Alkanolaminen und Polycarbonsäuren oder Anhydriden und einem Sojaprotein-Produkt erhalten wird. Optional kann das Bindemittel zusätzlich mit einer Saccharid-Komponente und Harnstoff ausgerüstet werden.

Die DE 60303949 T2 offenbart eine Formaldehyd-freie wässrige Bindemittelzusammensetzung für Mineralfasern umfassend: eine Bindemittelkomponente (A), erhältlich durch Umsetzen mindestens eines Alkanolamins mit mindestens einem Carbonsäureanhydrid und gegebenenfalls Behandeln des Reaktionsprodukts mit einer Base; und eine Bindemittelkomponente (B), welche mindestens ein Kohlenhydrat umfasst. Dabei umfasst die Bindemittelkomponente (A) das Reaktionsprodukt von mindestens einem Alkanolamin mit mindestens einem Carbonsäureanhydrid in einem Äquivalentverhältnis von Amin- und Hydroxygruppen (NH + OH) zu Carboxygruppen (COOH) von mindestens 0,4, bevorzugt mindestens 0,6. Die Bindemittelzusammensetzung kann auf Mineralfasern oder Mineralfaserprodukte durch herkömmliche Techniken, wie z.B. Luftspritzen oder Airless-Spritzen, Drehscheibenzerstäubung, Klotzen, Sättigung, Walzenauftrag, Vorhangbeschichten, Stampfabscheidung oder dgl., aufgebracht werden.

Die US-Patentanmeldung Nr. 2009/227706 beschreibt ebenfalls eine wässrige Bindemittelzusammensetzung für Mineralfasern. Diese umfasst eine wasserlösliche Bindemittelkomponente, erhältlich durch Umsetzen von mindestens einem Alkanolamin mit mindestens einem Carbonsäureanhydrid und gegebenenfalls Behandeln des Reaktionsprodukts mit einer Base; und mindestens ein Mittel zur Verbesserung der Hydrolysestabilität, ausgewählt aus Monoalkanolaminen, Allylamine, Peroxyverbindungen, Epoxyverbindungen, Verbindungen mit mindestens einer langkettigen aliphatischen Einheit und mindestens einer funktionellen Gruppe; und SBR Latices.

### Aufgabe der Erfindung

Ziel der vorliegenden Erfindung, ein wasserlösliches Prepolymer und ein Verfahren zur Herstellung desselben vorzuschlagen, das kein Formaldehyd freisetzen kann. Insbesondere soll ein Prepolymer bereitgestellt werden, das als Bindemittel bei der Herstellung von Fasergebilden selbstvernetzend eingesetzt werden und hohe Temperaturen aushalten kann. Ein weiteres Ziel ist es, ein Prepolymer zur Verfügung zu stellen, dass als Ausgangsprodukt nachwachsende Rohstoffe verwendet.

Beim Recycling werden herstellungsbedingte Faserrückstände sowie Steinwolle-Dämmplatten nach ihrer Nutzungsphase in eine zu Pellets gebundene Gesteinsmasse gemischt und anschließend in die Mineralschmelze überführt. Dabei kann die geforderte Festigkeit solcher Recycling-Pellets insbesondere durch zuckerhaltige Anteile im ausgehärteten Bindemittel so stark unterschritten werden, dass ihre Zuführung in den industriellen Herstellungsprozess erschwert oder unterbrochen wird.

Es ist deshalb ein weiteres Ziel, die mangelhafte Festigkeit solcher Recycling-Pellets mit Hilfe des erfindungsgemäßen Bindemittels zu beseitigen.

### Beschreibung

Erfindungsgemäss wird die Aufgabe durch ein Verfahren mit folgenden Verfahrensschritten gelöst:
a) 10 - 60 Gew.-% eines reduzierenden Mono-, Oligo- oder Polysaccharids mit
b) 10 - 50 Gew.-% einer funktionalisierten Aminoverbindung, die ein primäres oder sekundäres Amins ist und zusätzlich mindestens eine Hydroxy- bzw. Carboxygruppe besitzt, zur Herstellung eines ersten Zwischenprodukts, und anschliessendem Umsetzen des ersten Zwischenproduktes mit
c) 1-10 Gew.-% einer aromatischen Anhydridverbindung, erhalten aus einer aromatischen Polycarbonsäure mit mindestens 2 Carboxygruppen in benachbarter 1,2-Stellung am aromatischen Kern, und
d) 10 - 25 Gew.-% einer aliphatischen Anhydridverbindung, erhalten aus einer aliphatischen Polycarbonsäure mit mindesten 2 Carboxygruppen in benachbarter 1,2-Stellung oder 1,3-Stellung zur Herstellung eines zweiten Zwischenprodukts,
   Lösen des zweiten Zwischenproduktes in Wasser und Umsetzen desselben mit
e) 1 - 15 Gew.-% einer Oxiran-Verbindung mit einer offenkettigen, verzweigten oder zyklischen Struktur und einem Kohlenstoffgerüst mit C2 - C16 Kohlenstoffatomen, die mindesten 1 und maximal 2 Epoxygruppen enthält, wobei sich die Stoffmengen a) bis e) zu 100 Gewichtsprozenten addieren.

Das erfindungsgemässe Verfahren hat den grossen Vorteil, dass damit Formaldehydfreie, thermisch selbstvernetzende Bindemittelmischungen hergestellt werden können. Es lassen sich hartelastische Duromere herstellen, welche vergleichsweise hohe Glasübergangstemperaturen aufweisen (160 - 190°C). Die durch das erfindungsgemäße Verfahren hergestellten Bindemittel sind unbegrenzt wasserlöslich und lassen sich in Form wässriger Harzlösungen verarbeiten. Sie erweisen sich bei der Verarbeitung gegenüber kurzzeitiger Temperaturschockeinwirkung überraschend stabil. Die erfindungsgemäßen wässrigen Bindemittel-Lösungen eignen sich bevorzugt zur Verfestigung von Fasersubstraten in faserhaltigen Gebilden. Besonders bevorzugt eignen sich die erfindungsgemäßen wässrigen Bindemittel wegen ihrer besonderen chemischen, physikalischen und applikatorischen Eigenschaften für die Herstellung von Kunstharz-gebundenen Formaldehyd-freien Steinwolle- oder Glasfaser-Dämmplatten. Es hat sich zudem überraschend gezeigt, dass die Verwendung der erfindungsgemäßen Steinwolle-Produkte als Zuschlagstoff für die Gesteinspellets beim Recyclen keine negative Auswirkung auf deren Festigkeit hat.

Vorteilhafte Varianten des Verfahrens sind Gegenstand der abhängigen Patentansprüche.

Gegenstand der vorliegenden ist auch ein wasserlösliches Prepolymer erhältlich durch ein Verfahren gemäss einem der Ansprüche 1 bis 14.

Beispiele zur Herstellung der erfindungsgemäßen Bindemittel-Lösungen:

### Beispiel 1:

Dextrose mit einem Glucosegehalt von 95 % wurde zunächst bis zur Massekonstanz getrocknet. Hiervon wurden anschließend 5 kg in einem beheizten 301 Reaktionskolben, der mit einern Kühler, einem Rührer und einem Tropftrichter bestückt war, vorgelegt. Die Saccharose wurde dann bis zu einer Temperatur von 85 °C erwärmt. Nun wurden 2,5 kg Diethanolamin in den Tropftrichter gegeben und innerhalb von 15 Minuten der Glucosemasse zugeführt. Sobald die Temperatur in der Reaktionsmasse anstieg, wurde die Wärmezufuhr unterbrochen. Nach Beendigung der exothermen Reaktion wurden dem Reaktionsgemisch unter Rühren portionsweise 700 g Pyromellithsäureanhydrid und nach weiteren 30 Minuten 3,7 kg Bernsteinsäureanhydrid zugeführt. Die Masse wurde dann 2 h lang gerührt und im Anschluß daran mit 4,3 kg Wasser versetzt. Nach Erhalt einer homogenen Reaktionslösung wurde dieser schließlich 1 kg Limonendioxyd zugegeben und eine weitere Stunde gerührt. Die fertige Harzlösung war rotbraun transparent und wurde zur Lagerung in einen Kanister abgefüllt.

### Beispiel 2:

Ein Saccharose-Gemisch mit einem von Fructosegehalt von 50 Masse-% und einem Glucosegehalt von 50 Masse-% wurde zunächst bis zur Massekonstanz getrocknet. Hiervon wurden anschließend 5 kg des Saccharose-Gemisches in einem beheizten 301 Reaktionskolben, der mit einem Kühler, einem Rührer und einem Tropftrichter bestückt war, vorgelegt. Das Saccharose-Gemisch wurde dann bis zu einer Temperatur von 85 °C erwärmt. Nun wurden 2,5 kg Diethanolamin in den Tropftrichter gegeben und innerhalb von 15 Minuten der Saccharose-Masse zugeführt. Sobald die Temperatur in der Reaktionsmasse anstieg, wurde die Wärmezufuhr durch die Heizung unterbrochen. Nach Beendigung der exothermen Reaktion wurden dem Reaktionsgemisch unter Rühren portionsweise 700 g Pyromellithsäureanhydrid und nach weiteren 30 Minuten 3,4 kg Maleinsäureanhydrid zugeführt. Die Masse wurde dann 2 h lang gerührt und im Anschluß daran mit 4,3 kg Wasser versetzt. Nach Erhalt einer homogenen Reaktionslösung wurde dieser schließlich 1 kg Resorcinoldiglycidylether (RDGE) zugegeben und eine weitere Stunde gerührt. Die fertige Harzlösung war rotbraun transparent wurde zur Lagerung in einen Kanister abgefüllt.

### Beispiel 3:

Ein β-Aminoalkohol wurde aus 1,2 kg Limonendioxyd und 910 g Monoethanolamin hergestellt. Dextrose mit einem Glucosegehalt von 95 % wurde zunächst bis zur Massekonstanz getrocknet. Hiervon wurden anschließend 5 kg in einen beheizten 301 Reaktionskolben gegeben, der mit einem Kühler, einem Rührer und einem Tropftrichter bestückt war. Die Saccharose wurde dann bis zu einer Temperatur von 85 °C erwärmt. Nun wurden 2,1 kg des hergestellten β-Aminoalkohols innerhalb von 15 Minuten der Glucosemasse zugeführt. Sobald die Temperatur in der Reaktionsmasse anstieg, wurde die Wärmezufuhr unterbrochen. Nach Beendigung der exothermen Reaktion wurden dem Reaktionsgemisch unter Rühren portionsweise 1,2 kg Phthalsäureanhydrid und nach weiteren 30 Minuten 3,7 kg Bernsteinsäureanhydrid zugeführt. Die Masse wurde dann 2 h lang gerührt und im Anschluß daran mit 4,3 kg Wasser versetzt. Nach Erhalt einer homogenen Reaktionslösung wurde dieser schließlich 1 kg Limonendioxyd zugegeben und eine weitere Stunde gerührt. Die fertige Harzlösung war rotbraun transparent und wurde zur Lagerung in einen Kanister abgefüllt.

Für den Einsatz zur maschinellen Herstellung von Steinwollegebilden wird die Harzlösung mit Wasser verdünnt (z.B. durch Verdünnung auf eine gewichtsmässig 15%-ige Lösung, und ggf. während des Herstellungsprozesses durch Wasserkühlung weiter auf eine insgesamt gewichtsmässig ungefähr 7.5 %-ige Lösung verdünnt) und gegebenenfalls mit 1 - 5 Gew-% Härtungs-Beschleuniger versehen.

## Patentansprüche

1. Verfahren zur Herstellung eines wasserlöslichen Prepolymeren, insbesondere zur Verwendung als Bindemittel, durch Umsetzen von
a) 10 - 60 Gew.-% eines reduzierenden Mono-, Oligo- oder Polysaccharids mit
b) 10 - 50 Gew.-% einer funktionalisierten Aminoverbindung, die ein primäres oder sekundäres Amins ist und zusätzlich mindestens eine Hydroxy- bzw. Carboxygruppe besitzt, zur Herstellung eines ersten Zwischenprodukts, und anschliessendem Umsetzen des ersten Zwischenproduktes mit
c) 1 -10 Gew.-% einer aromatischen Anhydridverbindung, erhalten aus einer aromatischen Polycarbonsäure mit mindestens 2 Carboxygruppen in benachbarter 1,2- Stellung am aromatischen Kern, und
d) 10 - 25 Gew.-% einer aliphatischen Anhydridverbindung, erhalten aus einer aliphatischen Polycarbonsäure mit mindestens 2 Carboxygruppen in benachbarter 1,2- Stellung oder 1,3-Stellung zur Herstellung eines zweiten Zwischenprodukts, Lösen des zweiten Zwischenproduktes in Wasser und Umsetzen desselben mit
e) 1 -15 Gew.-% einer Oxiran-Verbindung mit einer offenkettigen, verzweigten oder zyklischen Struktur und einem Kohlenstoffgerüst mit C2 - C16 Kohlenstoffatomen, die mindestens 1 und maximal 2 Epoxygruppen enthält, wobei sich die Stoffmengen a) bis e) zu 100 Gewichtsprozenten addieren.

2. Verfahren nach Anspruch 1, **dadurch gekennzeichnet, dass** als Saccharid ein Mono-, Oligo- oder Polysaccharid oder Mischungen derselben eingesetzt wird.

3. Verfahren nach Anspruch 1 oder 2, **dadurch gekennzeichnet, dass** als Saccharid Mono-, Di und/oder Trisaccharidverbindungen oder Mischungen derselben eingesetzt werden.

4. Verfahren nach einem der Ansprüche 1 bis 3, **dadurch gekennzeichnet, dass** als funktionalisierte Aminoverbindung ein Aminoalkohol oder eine Aminocarbonsäure verwendet werden, wobei die Aminoverbindung vorzugsweise ein Kohlenstoffgerüst mit C2 bis C15 Kohlenstoffatomen und wenigstens eine Hydroxy- oder Carboxygruppe aufweist.

5. Verfahren nach einem der Ansprüche 1 bis 4, **dadurch gekennzeichnet, dass** als aromatische Anhydridverbindung Polycarbonsäureanhydride mit 3 oder 4 Carboxygruppen eingesetzt werden, wobei die Carboxygruppen in mindestens einer vicinalen Stellung zueinander stehen sollen wie z. B. Trimellithsäureanhydrid, Pyromellithsäureanhydrid.

6. Verfahren nach Anspruch 5, **dadurch gekennzeichnet, dass** als Anhydridverbindung Anhydride, die auf der Basis nachwachsender Rohstoffe erhalten werden können, wie z. B. Aconitsäureanhydrid, Bernsteinsäureanhydrid, Citraconsäureanydrid, Camphersäureanhydrid, verwendet werden.

7. Verfahren nach Anspruch 1, **dadurch gekennzeichnet, dass** die Oxiran-Verbindung Limonenmonoxyd bzw. -dioxyd, Epoxyalkohle, Glycidyl.bzw. Diglygidylether, Glycidyl- bzw. Diglycidylester, zykloaliphatische Epoxyde wie z.B. Cyklohexenmonoxyd ist.

8. Verfahren nach einem der Ansprüche 1 bis 7, **dadurch gekennzeichnet, dass** das wasserlösliche Prepolymer in Wasser gelöst und eine wässrige Applikationslösung hergestellt wird, wobei das wasserlösliche Prepolymer vorzugsweise thermisch unter Selbstvernetzung zu einem wasserunlöslichen Polymer ausgehärtet wird.

9. Verfahren nach Anspruch 8, **dadurch gekennzeichnet, dass** zur Beschleunigung der thermischen Vernetzung der wässrigen Applikationslösung Vernetzungsbeschleuniger, wie z.B. protische Säuren, Metallsalze, Kompelxverbindungen oder Phosphoniumsalze zugesetzt werden.

10. Verfahren nach Anspruch 9, **dadurch gekennzeichnet, dass** als Vernetzungsbeschleuniger Metallsalze wie z.B. Manganacetat, Zinkacetat sowie Phosphoniumsalze auf der Basis von Triphenylphosphin eingesetzt werden.

11. Wasserlösliches Prepolymer erhältlich durch Umsetzen der nachfolgenden Komponenten:
a) 10 - 60 Gew.-% eines reduzierenden Mono-, Oligo- oder Polysaccharids,
b) 10 - 50 Gew.-% einer funktionalisierten Aminoverbindung, die ein primäres oder sekundäres Amins ist und zusätzlich mindestens eine Hydroxy- bzw. Carboxygruppe besitzt, zur Herstellung eines ersten Zwischenprodukts, und anschliessendem Umsetzen des ersten Zwischenproduktes mit
c) 1 - 10 Gew.-% einer aromatischen Anhydridverbindung, erhalten aus einer aromatischen Polycarbonsäure mit mindestens 2 Carboxygruppen in benachbarter 1,2- Stellung am aromatischen Kern,
d) 10 - 25 Gew.-% einer aliphatischen Anhydridverbindung, erhalten aus einer aliphatischen Polycarbonsäure mit mindestens 2 Carboxygruppen in benachbarter 1,2- Stellung oder 1,3-Stellung zur Herstellung eines zweiten Zwischenprodukts, Lösen des zweiten Zwischenproduktes in Wasser und Umsetzen desselben mit
e) 1 -15 Gew.-% einer Oxiran-Verbindung mit einer offenkettigen, verzweigten oder zyklischen Struktur und einem Kohlenstoffgerüst mit C2 - C16 Kohlenstoffatomen, die mindestens 1 und maximal 2 Epoxygruppen enthält, wobei sich die Stoffmengen a) bis e) zu 100 Gewichtsprozenten addieren.

12. Wasserlösliches Prepolymer gemäss Anspruch 11 und einem der Ansprüche 2 bis 10.

13. Verwendung einer wässrigen Bindemittel-Lösung enthaltend das wasserlösliche Prepolymer gemäss Anspruch 12 für die Herstellung von Verbundwerkstoffen, Formkörpern oder Einbrennlacken.

## Claims

1. Method for preparing a water soluble prepolymer, in particular for the use as a binding agent, by reacting
a) 10 to 60 weight percent of a reduced monosaccharide, oligosaccharide or polysaccharide with
b) 10 to 50 weight percent of a functionalized amino compound that is a primary or a secondary amine and that has additionally at least one hydroxyl or carboxyl group for preparing a first intermediate product and subsequently reacting of the first intermediate product with
c) 1 to 10 weight percent of an aromatic anhydride compound obtained from an aromatic polycarboxylic acid with at least 2 carboxyl groups in adjacent 1,2 position on the aromatic nucleus and
d) 10 to 25 weight percent of an aliphatic anhydride compound obtained from an aliphatic polycarboxylic acid with at least 2 carboxyl groups in adjacent 1,2 or 1,3 position for preparing a second intermediate product in water and reacting thereof with
e) 1 to 15 weight percent of an oxirane compound with an open-chain, a branched or a cyclic structure and a carbon network with 2 to 16 carbon atoms that contains at least one and maximally 2 epoxy groups, wherein the quantities of substances a) to e) add up to 100 weight percent.

2. Method according to claim 1, **characterized in that** a monosaccharide, an oligosaccharide or a polysaccharide or mixtures thereof are used as a saccharide.

3. Method according to claim 1 or 2, **characterized in that** monosaccharide, disaccharide and/or trisaccharide compounds or mixtures thereof are used as a saccharide.

4. Method according to one of the claims 1 to 3, **characterized in that** an aminoalcohol or an amino carboxylic acid is used as a functionalized amino compound, wherein the amino compound has preferably a carbon network with 2 to 15 carbon atoms and at least one hydroxyl or carboxyl group.

5. Method according to one of the claims 1 to 4, **characterized in that** polycarboxylic acid anhydrides with 3 or 4 carboxyl groups are used as an aromatic anhydride compound, wherein the carboxyl groups should stand in at least one vicinal position to one another such as, for example, trimellitic acid anhydride, pyromellitic acid anhydride.

6. Method according to claim 5, **characterized in that** anhydrides that can be obtained on the base of renewable raw materials such as aconitic acid anhydride, succinic acid anhydride, citraconic acid anhydride, camphoric acid anhydride are used as anhydride compounds.

7. Method according to claim 1, **characterized in that** the oxirane compound is limonene monoxide or limonene dioxide, epoxy alcohols, glycidyl ether or diglygidyl ether, glycidyl ester or diglycidyl ester, cycloaliphatic epoxides such as, for example, cyclohexene monoxide.

8. Method according to one of the claims 1 to 7, **characterized in that** the water soluble prepolymer is dissolved in water and an aqueous application solution is prepared, wherein the water soluble prepolymer is preferably thermally hardened by self-crosslinking to an insoluble polymer.

9. Method according to claim 8, **characterized in that** crosslinking accelerators such as, for example, protic acids, metal salts, complex compounds or phosphonium salts are added for the acceleration of the thermic crosslinking of the aqueous application solution.

10. Method according to claim 9, **characterized in that** metal salts such as, for example, manganese acetate, zinc acetate as well as phosphonium salts are used as crosslinking accelerators on the base of triphenylphosphine.

11. Water soluble prepolymer that can be obtained by reacting the following components:
a) 10 to 60 weight percent of a reduced monosaccharide, oligosaccharide or polysaccharide,
b) 10 to 50 weight percent of a functionalized amino compound that is a primary or a secondary amine and that has additionally at least one hydroxyl or carboxyl group for preparing a first intermediate product and subsequently reacting of the first intermediate product with
c) 1 to 10 weight percent of an aromatic anhydride compound obtained from an aromatic polycarboxylic acid with at least 2 carboxyl groups in adjacent 1,2 position on the aromatic nucleus,
d) 10 to 25 weight percent of an aliphatic anhydride compound obtained from an aliphatic polycarboxylic acid with at least 2 carboxyl groups in adjacent 1,2 or 1,3 position for preparing a second intermediate product, dissolving of the second intermediate product in water and reacting thereof with
e) 1 to 15 weight percent of an oxirane compound with an open-chain, a branched or a cyclic structure and a carbon network with 2 to 16 carbon atoms that contains at least one and maximally 2 epoxy groups, wherein the quantities of substances a) to e) add up to 100 weight percent.

12. Water soluble prepolymer according to claim 11 and one of the claims 2 to 10.

13. Use of an aqueous binding agent solution containing the water soluble prepolymer according to claim 12 for preparing composite materials, molded bodies or stove enamels.

## Revendications

1. Procédé de fabrication d'un prépolymère hydrosoluble, en particulier pour être utilisé comme liant, en faisant réagir
a) 10 à 60% en poids d'un monosaccharide, d'un oligosaccharide ou d'un polysaccharide réduit avec
b) 10 à 50% en poids d'un composé amino fonctionnalisé qui est une amine primaire ou secondaire et de plus au moins un groupe hydroxyle ou un groupe carboxyle pour la fabrication d'un premier produit intermédiaire et en faisant réagir le premier produit intermédiaire avec
c) 1 à 10% en poids d'un composé anhydride aromatique, obtenu à partir d'un acide polycarboxylique aromatique avec au moins 2 groupes carboxyles à la position 1,2 voisine sur le noyau aromatique et
d) 10 à 25% en poids d'un composé anhydride aliphatique, obtenu à partir d'un acide polycarboxylique aliphatique avec au moins 2 groupes carboxyles à la position 1,2 ou à la position 1,3 voisine pour la fabrication d'un second produit intermédiaire, dissolution du second produit intermédiaire dans de l'eau et réaction de celui-ci avec
e) 1 à 15% en poids d'un composé d'oxirane avec une structure à chaîne ouverte, ramifiée ou cyclique et un squelette carboné de 2 à 16 atomes de carbone qui contient au moins 1 et au maximum 2 groupes époxy, les quantités de substance a) à e) s'ajoutant pour faire 100% en poids.

2. Procédé selon la revendication 1, **caractérisé en ce qu'**un monosaccharide, un oligosaccharide ou un polysaccharide ou des mélanges de ceux-ci sont mis en oeuvre comme saccharide.

3. Procédé selon la revendication 1 ou 2, **caractérisé en ce que** des composés de monosaccharide, de disaccharide et/ou de trisaccharide ou des mélanges de ceux-ci sont mis en oeuvre comme saccharide.

4. Procédé selon l'une des revendications 1 à 3, **caractérisé en ce qu'**un aminolcool ou un acide aminocarboxylique est utilisé comme composé amino fonctionnalisé, le composé amino présentant de préférence un squelette carboné de 2 à 15 atomes de carbone et au moins un groupe hydroxyle ou un groupe carboxyle.

5. Procédé selon l'une des revendications 1 à 4, **caractérisé en ce que** des anhydrides d'acide polycarbonique avec 3 ou 4 groupes carboxyles sont utilisés comme composés anhydrides aromatiques, cependant que les groupes carboxyles devraient se tenir dans au moins une position voisine l'un par rapport à l'autre comme par exemple l'anhydride d'acide trimellitique, l'anhydride d'acide pyroméllitique.

6. Procédé selon la revendication 5, **caractérisé en ce que** des anhydrides qui peuvent être obtenus sur la base de matières premières renouvelables comme l'anhydride d'acide aconitique, l'anhydride d'acide succinique, l'anhydride d'acide citraconique, l'anhydride d'acide camphorique sont utilisés.

7. Procédé selon la revendication 1, **caractérisé en ce que** le composé d'oxirane est du monoxyde ou du dioxyde de limonène, des époxyalcools, de l'éther de glycidile ou de diglygidyle, de l'ester de glycidyle ou de diglycidyle, des époxydes cycloaliphatiques comme, par exemple, le monoxyde de cyclohexène.

8. Procédé selon l'une des revendications 1 à 7, **caractérisé en ce que** le prépolymère hydrosoluble est dissous dans de l'eau et qu'une solution d'application aqueuse est fabriquée, cependant que le prépolymère hydrosoluble est durci de préférence de manière thermique par autoréticulation en un polymère non soluble dans l'eau.

9. Procédé selon la revendication 8, **caractérisé en ce que** des accélérateurs de réticulation comme, par exemple, des acides protiques, des sels de métaux, des composés complexes ou des sels de phosphonium sont ajoutés pour l'accélération de la réticulation thermique de la solution d'application aqueuse.

10. Procédé selon la revendication 9, **caractérisé en ce que** des sels de métaux comme, par exemple l'acétate de manganèse, l'acétate de zinc aussi bien que des sels de phosphonium sont mis en œuvre sur la base de triphénylphosphine comme accélérateurs de réticulation.

11. Prépolymère hydrosoluble qui peut être obtenu en faisant réagir les composants suivants :
a) 10à 60% en poids d'un monosaccharide, d'un oligosaccharide ou d'un polysaccharide réduit,
b) 10 à 50% en poids d'un composé amino fonctionnalisé qui est une amine primaire ou secondaire et de plus au moins un groupe hydroxyle ou un groupe carboxyle pour la fabrication d'un premier produit intermédiaire et en faisant réagir le premier produit intermédiaire avec
c) 1 à 10% en poids d'un composé anhydride aromatique, obtenu à partir d'un acide polycarboxylique aromatique avec au moins 2 groupes carboxyles à la position 1,2 voisine sur le noyau aromatique,
d) 10 à 25% en poids d'un composé anhydride aliphatique, obtenu à partir d'un acide polycarboxylique aliphatique avec au moins 2 groupes carboxyles à la position 1,2 ou à la position 1,3 voisine pour la fabrication d'un second produit intermédiaire, dissolution du second produit intermédiaire dans de l'eau et réaction de celui-ci avec
e) 1 à 15% en poids d'un composé d'oxirane avec une structure à chaîne ouverte, ramifiée ou cyclique et un squelette carboné de 2 à 16 atomes de carbone qui contient au moins 1 et au maximum 2 groupes époxy, les quantités de substance a) à e) s'ajoutant pour faire 100% en poids.

12. Prépolymère hydrosoluble selon la revendication 11 et l'une des revendications 2 à 10.

13. Utilisation d'une solution aqueuse de liant qui contient le prépolymère hydrosoluble selon la revendication 12 pour la composition de matériaux composites, de corps moulés ou de vernis-émails.
